# FASCICULE DE BREVET EUROPEEN

(11) **EP 1 205 369 B1**
(45) Date de publication et mention de la délivrance du brevet: **02.01.2008**
(21) Numéro de dépôt: 01402845.0
(22) Date de dépôt: 05.11.2001
(51) Int. Cl.: B60T 13/68, B60T 17/18, B64C 25/44

(54) **Architecture de système hydraulique de freinage d'aéronef**
Architektur eines hydraulischen Flugzeugbremssystems
Architecture of a hydraulic brake system for an aircraft

(30) Priorité: 10.11.2000 FR 0014447
(43) Date de publication de la demande: 15.05.2002
(73) Titulaire: MESSIER-BUGATTI, 78140 Velizy Villacoublay (FR)
(72) Inventeur: Bourguet, Vincent, 91600 Savigny sur Orge (FR); Hamzeh, Walid, 31530 Levignac (FR)
(74) Mandataire: Jaunez, Xavier

(56) Documents cités:
- EP-A- 0 328 175
- US-A- 5 397 173

## Description

L'invention concerne une architecture de système hydraulique de freinage adapté à des aéronefs comportant des atterrisseurs à roues freinées.

L'aéronef est généralement équipé d'un circuit hydraulique principal, ce circuit hydraulique étant agencé pour alimenter les actionneurs de freinage des roues portées par les atterrisseurs principaux, ces actionneurs prenant la forme d'un frein comportant une première série de disques, appelée rotor, et solidaire en rotation des roues, et une seconde série de disques, appelée stator, et immobile en rotation, les disques des deux séries étant agencés en alternance selon l'axe de rotation de la roue et pressés l'un sur l'autre au moyen de pistons portés coulissants dans une couronne hydraulique et actionnés au moyen du fluide hydraulique sous pression acheminé par le circuit hydraulique principal de l'aéronef. Cette pression des disques l'un sur l'autre génère alors du frottement du fait que les disques du rotor tournent avec la roue tandis que les disques du stator sont immobiles en rotation. On dissipe ainsi l'énergie cinétique de l'aéronef en chaleur par le frottement généré, ce qui a pour effet de ralentir l'aéronef.

Le freinage est une fonction critique de l'aéronef, et sa perte totale, par exemple à l'atterrissage, entraînerait une mise en danger de la vie des passagers inacceptable, sans parler des possibles dégâts sur l'aéronef lui-même. Par ailleurs, l'exigence de sécurité conduit à orienter la conception des systèmes de l'aéronef pour faire en sorte qu'une panne simple d'un système (par exemple la panne du circuit hydraulique principal) ne puisse conduire à une catastrophe.

Aussi équipe-t-on généralement l'aéronef d'un circuit hydraulique de secours, dont le fluide hydraulique est acheminé jusqu'aux freins en cas de défaillance du circuit hydraulique principal. Selon la philosophie de conception des freins, ceux-ci sont, dans une première variante, équipés d'une double cavité, c'est-à-dire que leur couronne porte une double série de pistons, une première série étant actionnée par le circuit hydraulique principal, tandis que la deuxième série est actionnée par le circuit hydraulique de secours. La ségrégation des deux circuits est ainsi prolongée jusqu'à l'actionneur lui-même. Selon une deuxième variante, le frein est muni d'une simple cavité, c'est-à-dire d'une seule série de pistons alimentée alternativement par l'un ou l'autre des circuits, grâce à un clapet navette généralement situé dans la soute de l'atterrisseur et amenant dans le frein le fluide hydraulique du circuit le plus pressurisé. L'avantage est ici la simplification de la couronne des freins et de la tuyauterie hydraulique qui descend le long de l'atterrisseur, puisqu'un seul tuyau par frein suffit alors.

Etant donné la taille et la masse des aéronefs commerciaux envisagés à l'heure actuelle, les avionneurs ont été amenés à considérer l'utilisation d'atterrisseurs principaux en nombre augmenté, par exemple deux atterrisseurs de voilure et un ou deux atterrisseurs de fuselage.

Le document US 5397173 décrit un système de freinage aeronef conventionel.

L'augmentation du nombre d'atterrisseurs conduit à la multiplication concomitante des tuyauteries de freinage des deux circuits, ce d'autant plus que l'on envisage des atterrisseurs de voilure ou de fuselage munis d'au moins six roues. Cette multiplication, ainsi que l'allongement des tuyauteries dû à la taille importante de l'aéronef conduisent à grever le devis de masse de l'aéronef d'une façon économiquement inacceptable.

En vue de simplifier et d'alléger le système de freinage d'un tel aéronef, on propose une architecture de système hydraulique de freinage adaptée à un aéronef du type comportant au moins un groupe d'atterrisseurs principaux, chaque atterrisseur comportant un nombre déterminé de roues munies chacune d'un frein actionné hydrauliquement, le ou chaque groupe d'atterrisseurs étant associé à un circuit hydraulique muni d'équipements hydrauliques et adapté pour acheminer vers tous les freins du groupe d'atterrisseurs un fluide hydraulique mis sous pression par au moins un dispositif de génération de pression de l'aéronef associé à une réserve de l'aéronef. Selon l'invention, des accumulateurs sont connectés sur le ou chaque circuit en nombre suffisant pour alimenter chacun deux paires de freins, chaque paire de freins étant montée sur un atterrisseur distinct, une électropompe étant agencée pour maintenir un niveau de pression prédéterminé dans tous les accumulateurs du circuit concerné.

Ainsi, la défaillance d'un circuit n'affecte qu'un seul groupe d'atterrisseurs, les freins portés par les atterrisseurs d'un autre groupe continuant à être alimentés de façon normale par l'autre circuit. En cas de défaillance d'un des circuits, par exemple une rupture de tuyauterie ou une panne du dispositif de génération de pression, les accumulateurs, assistés le cas échéant de l'électropompe prennent le relais pour maintenir la pression à un niveau suffisant pour assurer un freinage acceptable pour la sécurité des passagers. Quand bien même ces moyens viendraient eux-mêmes à faillir, l'aéronef conserverait quand même une capacité de freinage sur l'autre groupe d'atterrisseurs, ce qui n'était pas possible avec les architectures précédentes. En outre, cette architecture permet une simplification considérable de la tuyauterie hydraulique, car il n'est plus besoin d'acheminer les tuyaux venant des deux circuits à chaque atterrisseur. Cette architecture permet également l'utilisation de freins à simple cavité, de masse et de complexité moins importante que des freins à double cavité.

On envisage bien sûr de constituer des groupes d'atterrisseurs symétriques, de sorte que la défaillance totale d'un des circuits ne rende pas le freinage résiduel dissymétrique, compliquant sérieusement la tâche du pilote. Par exemple, on pourra constituer le groupe des atterrisseurs de voilure et le groupe des atterrisseurs de fuselage, chacun ayant son circuit d'alimentation. On comprend alors que cette architecture ne saurait être mise en oeuvre dans des appareils munis uniquement de deux atterrisseurs de voilure constituant alors chacun un groupe distinct, car dans ce cas, la défaillance d'un circuit rendrait le freinage très fortement dissymétrique, donc délicat à gérer.

La pression disponible aux freins est donnée en secours par l'accumulateur associé dont la capacité est suffisante pour l'opération des freins connectés au circuit correspondant. La pression de l'accumulateur est maintenue en temps normal par le dispositif de génération de pression du circuit hydraulique. Cette pression est maintenue en secours par l'électropompe. Par ailleurs, l'accumulateur peut être utilisé pour le frein de parc, c'est-à-dire l'immobilisation de l'aéronef lorsque celui-ci est arrêté moteurs coupés. Par ailleurs, l'électropompe, comme son nom l'indique, est mue par un moteur électrique, a priori insensible aux pannes hydrauliques.

La panne d'un accumulateur ne concerne que deux paires de roues, chaque paire étant située sur un atterrisseur différent, de sorte que l'aéronef conserve une capacité de freinage conséquente, puisque seuls quatre freins sont perdus sur un nombre total de l'ordre de vingt. On peut ainsi encore autoriser l'aéronef à décoller, même avec un accumulateur défaillant.

Par sécurité, chaque accumulateur est avantageusement équipé d'une valve de surpression.

Ainsi, en cas de surpression dans un accumulateur, la valve s'ouvre et laisse échapper une certaine quantité de fluide hydraulique vers la réserve aéronef, ce qui a pour effet de baisser la pression jusqu'à un seuil de sécurité de l'accumulateur.

Par sécurité encore, l'accumulateur est équipé d'un clapet anti-retour sur la ligne le connectant au circuit, pour éviter qu'il ne se décharge dans le circuit en cas de chute de pression dans celui-ci.

Encore pour des raisons de sécurité, on prévoit que l'électropompe est équipée de sa propre réserve de fluide hydraulique.

Ainsi, si la réserve de l'aéronef n'est pas disponible, il est encore possible d'utiliser la réserve de l'électropompe pour freiner.

Afin, en secours, de ne pas vider la réserve de l'électropompe dans la réserve de l'aéronef, le circuit hydraulique comporte avantageusement un clapet anti-retour général en amont de l'électropompe, ainsi qu'un sélecteur de retour collectant toutes les lignes retour de tous les équipements hydrauliques situés en aval de ce clapet anti-retour et dirigeant le flux de fluide hydraulique de retour soit vers la réserve de l'aéronef, soit vers la réserve de l'électropompe.

Ainsi, en commandant le sélecteur de retour de façon à diriger le flux de fluide hydraulique de retour vers la réserve de l'électropompe, on crée un circuit fermé qui ne risque pas de se déverser dans le circuit aéronef.

Chaque équipement est avantageusement équipé d'un clapet anti-retour sur sa ligne de retour, afin, en cas de rupture d'une des lignes de retour, d'éviter que la réserve de l'électropompe ne se vide par cette tuyauterie rompue.

En effet, ce genre d'aéronef est appelé à voler pendant des durées très longues, de l'ordre de 15 à 20 heures. Sur un tel laps de temps, les fuites internes des équipements peuvent devenir non négligeables et compromettre la capacité de l'électropompe à maintenir le niveau de pression requis dans la partie de circuit isolé par le clapet anti-retour amont. On sait en particulier que certains équipements, tels que les distributeurs proportionnels qui seront introduits plus loin, génèrent des débits de retour non négligeables. La disposition ci-dessus évite que la réserve ne se vide par la ligne retour rompue d'un des équipements hydrauliques, les lignes retour étant en pratique toutes connectées entre elles.

On prévoit avantageusement d'agencer au moins un sélecteur de freinage en aval d'au moins un accumulateur, servant à autoriser ou interdire l'arrivée du fluide hydraulique sous pression vers les freins associés à cet accumulateur.

Ce sélecteur sert à empêcher des opérations intempestives des freins en vol, ainsi qu'à isoler un circuit en cas de rupture de tuyauterie en aval du sélecteur, pour éviter de vider la réserve de fluide hydraulique de l'aéronef.

En vue de commander le freinage, au moins un distributeur proportionnel est agencé en aval d'au moins un sélecteur de freinage.

Le rôle du distributeur proportionnel est de moduler la pression opérant effectivement sur les pistons de la couronne du ou des freins associés, cette modulation étant commandée par un dispositif contrôleur de freinage optimisant la pression en fonction de consignes données par le pilote ou par l'ordinateur de bord de l'aéronef, et fonction d'informations de retour comme la vitesse de rotation de la roue, son accélération angulaire, ou encore la pression effective dans les freins, selon un algorithme prédéterminé. Le contrôleur de freinage génère des signaux de commande des distributeurs proportionnels, qui réagissent alors en fonction de ces signaux pour imposer la pression requise au frein associé.

Pour assurer la fonction de frein de parc, on agence avantageusement au moins un sélecteur de parc en aval d'au moins un accumulateur.

Ainsi, la pression des accumulateurs est directement transmise aux freins concernés, sans que cette pression soit transmise via la ligne comportant le sélecteur de freinage et le ou les distributeurs proportionnels.

Avantageusement, un clapet navette est disposé sur la ligne d'alimentation du frein, connectant celui-ci soit au distributeur proportionnel associé, soit au sélecteur de parc dont il dépend.

Afin de surveiller l'ensemble du système, des capteurs de pression sont avantageusement agencés sur le circuit pour mesurer la pression régnant dans le circuit à la sortie de chaque accumulateur.

Grâce à ces capteurs, il est possible de surveiller à tout moment l'état du circuit et déclencher d'éventuelles alarmes.

Pour résumer l'invention, si l'on suit la ligne du circuit hydraulique de l'aéronef acheminant le fluide hydraulique sous pression du dispositif de génération de pression, on trouve successivement le clapet anti-retour général, puis la connexion de l'électropompe au circuit. La ligne se sépare alors en autant de lignes que l'on peut compter deux fois deux paires de freins, ou ce qui revient au même, en autant de lignes qu'il y a d'accumulateurs. Suivant l'une de ces lignes, on trouve un clapet anti-retour évitant le décharge de l'accumulateur dans le circuit général en cas de chute de pression de ce circuit, puis l'accumulateur. A la sortie de chaque accumulateur, et en aval du clapet anti-retour précité, on trouve alors une ligne ouverte ou fermée par le sélecteur de freinage. A la sortie de ce sélecteur, la ligne se dédouble pour alimenter les deux paires de freins connectés, chaque paire étant montée sur un atterrisseur différent. Puis la ligne se dédouble encore pour alimenter les deux distributeurs proportionnels des deux freins de la paire concernée, et enfin la ligne aboutit au frein associé au distributeur via le clapet navette.

Le fluide peut aussi être transmis directement à un frein sans passer par la ligne comprenant le sélecteur de freinage et le distributeur proportionnel associé. En effet, la ligne venant de l'accumulateur dont dépend le frein en question se dédouble pour se connecter au surplus au sélecteur de parc, celui-ci étant relié directement au frein par le clapet navette précité.

Enfin, les lignes de retour de chaque distributeur proportionnel, sélecteur de frein ou sélecteur de parc sont dirigés vers un sélecteur de retour via des clapets anti-retour, ce sélecteur de retour dirigeant le flux de fluide hydraulique de retour soit vers la réserve de l'aéronef, soit vers la réserve de l'électropompe.

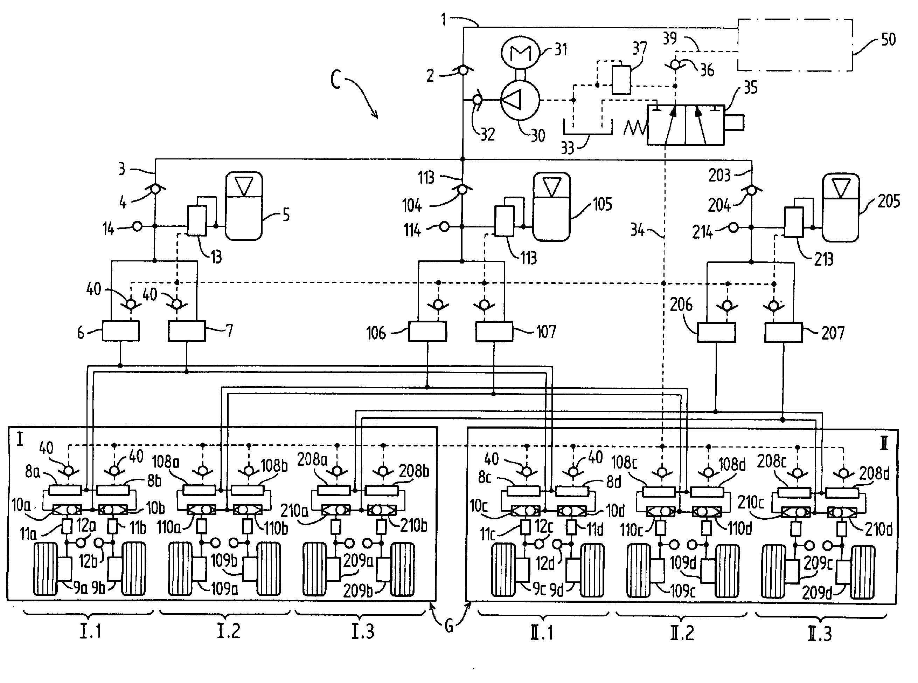

D'autres caractéristiques et avantages de l'invention apparaîtront plus clairement à la lumière de la description qui suit d'un mode de réalisation particulier non limitatif de l'invention, en référence à la figure unique annexée représentant le schéma hydraulique d'une architecture selon l'invention.

Une architecture de freinage selon l'invention comprend un circuit hydraulique par groupe d'atterrisseurs munis de freins, donc en principe les atterrisseurs principaux, bien qu'il ne soit pas exclu que le ou les atterrisseurs auxiliaires puissent éventuellement être munis de freins et donc incorporés à l'un des groupes d'atterrisseurs, ou former un groupe autonome.

Par souci de sécurité, on s'attachera à considérer des groupes d'atterrisseurs disposés symétriquement par rapport au plan de symétrie de l'aéronef, afin qu'en cas de dysfonctionnement d'un des circuits, on n'ait pas à gérer une capacité résiduelle de freinage asymétrique, très gênante pour le bon contrôle de l'aéronef. Ainsi, pour les aéronefs très gros porteurs envisagés, le groupe des atterrisseurs de fuselage et le groupe des atterrisseurs de voilure sont en pratique agencés symétriquement par rapport au plan de symétrie de l'aéronef.

Selon l'invention, tous les freins des atterrisseurs d'un groupe noté G sont associés à un circuit hydraulique noté C; la figure représente un circuit hydraulique C associé aux atterrisseurs de fuselage I et II, qui possèdent tous deux six roues freinées. Les deux atterrisseurs du groupe G sont ici symbolisés par les rectangles grisés. Chacun de ces rectangles contient trois paires de roues, chaque roue étant munie d'un frein hydraulique.

Les circuits associés à d'autres groupes d'atterrisseurs sont similaires, de sorte que la description d'un seul circuit hydraulique suffit à la bonne compréhension de l'invention. Les lignes d'alimentation des équipements hydrauliques sont en traits pleins, tandis que les lignes retour de ces mêmes équipements sont représentés en pointillés.

Le circuit hydraulique C représenté comprend une arrivée générale 1 de fluide sous pression venant d'un dispositif de génération de pression de l'aéronef, ce dispositif étant associé à une réserve d'huile de l'aéronef. Ce dispositif est ici symbolisé par un rectangle en traits mixtes référencé 50. Il s'agit généralement de pompes hydrauliques actionnées par les moteurs de l'aéronef, ou encore par le groupe auxiliaire de puissance de l'aéronef. Un clapet anti-retour général 2 empêche le retour de fluide vers le ou les dispositifs de génération de pression de l'aéronef 50. Le circuit C comporte une ligne retour 39 générale vers la réserve de l'avion, ici symboliquement connectée au rectangle en traits mixtes. Si l'avion comporte d'autres groupes d'atterrisseurs associés chacun à un circuit hydraulique correspondant, ces circuits sont alors également connectés à ce dispositif de génération de pression 50.

Le circuit C se divise ensuite en trois branches similaires 3,103,203. Chaque branche est destinée à alimenter deux paires de roues, respectivement I.1 et II.1, I.2 et II.2, I.3 et II.3, chacune des paires concernées étant montée sur un atterrisseur distinct. On va ici décrire plus en détail la branche 3 ; il est entendu que les deux autres branches 103, 203 sont parfaitement identiques, et les références ainsi que les explications relatives aux éléments référencés sont directement transposables aux deux autres branches en augmentant la référence de l'élément concerné de la première branche de 100 ou de 200. Par souci de clarté, les références augmentées, si elles sont utilisées dans la description ou les revendications, n'ont pas toutes été notées sur la figure, mais leur signification et les éléments qu'elles désignent se déduisent à l'évidence des références de la branche décrite.

Une branche 3 comporte tout d'abord un clapet anti-retour 4 destiné à empêcher le déversement du fluide contenu dans un accumulateur 5, situé en aval du clapet anti-retour 4a, dans le circuit aéronef, ou dans les autres branches. Le rôle de l'accumulateur 5 sera expliqué plus bas. Cet accumulateur 5 est équipé d'une valve de surpression 13 limitant la pression du fluide contenu dans ledit accumulateur. On notera que cet accumulateur 5 est maintenu en pression (ou regonflé le cas échéant) par le dispositif de génération de l'aéronef 50, lorsque celui-ci fonctionne.

Puis la branche 3 se divise pour alimenter d'une part un sélecteur de freinage 6 et d'autre part un sélecteur de parc 7. Ces sélecteurs sont ici des électrovannes, c'est à dire des clapets à commande électrique, autorisant le passage du fluide vers la partie de circuit situé en leur aval, ou mettant cette partie aval en communication avec la réserve aéronef.

Le sélecteur de freinage 6 est connecté à quatre distributeurs proportionnels 8a,8b,8c,8d, les distributeurs 8a et 8b étant associés à des freins 9a et 9b de l'atterrisseur I, tandis que les distributeurs 8c et 8d sont associés à des freins 9c et 9d de l'atterrisseur II. Chaque distributeur 8a,8b,8c,8d alimente le frein associé 9a,9b,9c,9d par l'intermédiaire d'un clapet navette, référencé respectivement 10a,10b,10c,10d. Les entrées opposées des quatre clapets navette 10a,10b,10c,10d non encore décrites sont connectées à la sortie du sélecteur de parc 7.

Ainsi, grâce aux clapets navette 10a,10b,10c,10d le frein 9a,9b,9c,9d peut être alimenté soit par l'intermédiaire du sélecteur de freinage 6 et son distributeur proportionnel associé 8a,8b,8c,8d, soit par le sélecteur de parc 7. Le premier cas correspond à une utilisation de freinage de l'aéronef, lors de laquelle les distributeurs proportionnels 8a,8b,8c,8d modulent la pression qui leur est fournie pour contrôler le couple de freinage généré par le frein associé 9a,9b,9c,9d ; le second cas correspondant à l'immobilisation de l'aéronef moteurs arrêtés. Dans ce dernier cas, le dispositif de génération de pression 50 de l'aéronef ne fonctionne pas, la pression de parc est donnée par l'accumulateur 5. Le clapet anti-retour 4 évite alors que l'accumulateur 5 ne se vide dans la ligne 3, et donc dans la réserve aéronef, car le dispositif de génération de pression 50 arrêté peut être shunté vers la réserve aéronef.

La première des foncions des accumulateurs 5,105,205 est ainsi de permettre le freinage de parc, c'est à dire l'immobilisation de l'aéronef à l'arrêt.

Un fusible 11a,11b,11c,11d est associé à chaque frein 9a,9b,9c,9d, ce fusible étant destiné à empêcher la vidange du circuit complet en cas de rupture de tuyauterie en aval de ce fusible. En effet, la tuyauterie concernée est celle qui court le long de l'atterrisseur, et qui est donc potentiellement exposée aux chocs divers, tels que des impacts de cailloux, ou de morceaux de pneumatiques consécutifs à une crevaison, risquant de la détériorer au point de provoquer une fuite.

Le circuit d'alimentation du frein 9a,9b,9c,9d est équipé d'un capteur de pression 12a,12b,12c,12d piqué sur chaque ligne allant du fusible 11a,11b,11c,11d au frein 9a,9b,9c,9d correspondant, afin de mesurer la pression effectivement appliquée aux freins. Cette information est utilisée par un contrôleur de freinage non représenté afin de générer des ordres de commande du distributeur proportionnel 8a,8b,8c,8d dont le but est de moduler la pression à appliquer au frein associé. Cette modulation permet l'optimisation du freinage, en évitant le blocage des roues et en faisant en sorte que la vitesse de glissement de la roue par rapport au sol engendre un frottement élevé.

En cas de panne du dispositif de génération de pression 50, les accumulateurs 5,105,205 sont dimensionnés pour être capable de délivrer une pression et un débit suffisants pour une utilisation des deux paires de freins associées lors d'un atterrissage. C'est là la seconde fonction des accumulateurs 5,105,205. Il est donc essentiel que l'accumulateur garde une pression proche de sa pression nominale, au moins au cours d'un vol, qui pour ce genre d'aéronef, peut durer plus de quinze heures.

Or le circuit hydraulique C est susceptible de fuites de fluide hydraulique vers l'extérieur. Bien que ces fuites soient faibles, leur cumul sur une grande durée de vol peut conduire à une baisse de pression qui rendrait celle-ci incompatible avec la bonne opération des freins, si les accumulateurs 5,105,205 n'étaient plus regonflés par le dispositif de génération de pression de l'aéronef 50, à supposer par exemple que celui-ci défaille en début de vol. Afin de garder un niveau de pression suffisant dans le circuit, voire de subvenir à la défaillance brutale d'un accumulateur, une électropompe 30 est connectée au circuit, en aval du clapet anti-retour général 2, pour débiter du fluide sous pression dans le circuit. Cette électropompe, ici unique et commune aux accumulateurs 5,105,205, est munie d'un moteur électrique 31, de sorte que la pression dans le circuit serait encore assurée en cas de panne des moteurs de l'aéronef, le moteur 31 étant alors alimenté électriquement par le groupe auxiliaire de puissance de l'aéronef, indépendant des moteurs.

Cette pompe est munie d'un clapet anti-retour 32 de protection, et débite dans le circuit en aval du clapet anti-retour général 2, ce qui évite que le fluide ainsi pompé retourne vers le dispositif de génération de pression de l'aéronef. L'électropompe 30 pompe le fluide d'une réserve 33 spécifique, isolée de la réserve aéronef. Cette réserve 33 est alimentée par les lignes retour de tous les équipements hydrauliques en aval de la pompe, à savoir les valves de surpression 13,113,213 des accumulateurs 5,105,205, les sélecteurs de freinage 6,106,206, les sélecteurs de parc 7,107,207, et les distributeurs proportionnels 8a...8d, 108a...108d, 208a...208d, ces retours étant collectés par une ligne commune 34 et déviés vers la réserve 33 par un sélecteur de retour 35.

En temps normal, ce sélecteur 35 met en communication les lignes retour des équipements hydrauliques avec la réserve aéronef via le clapet anti-retour 36 et une ligne 39 ici symboliquement connectée au dispositif de génération de pression 50, incluant, comme il a été dit, la réserve de l'aéronef.

Mais lorsque l'électropompe 30 est en fonctionnement, celle-ci débite dans le circuit C, et le retour des équipements ainsi alimentés est dévié par le sélecteur de retour 35 vers la réserve 33 de l'électropompe 30. On a ainsi réalisé un circuit fermé, évitant l'écoulement du contenu de la réserve 33 de l'électropompe 30 dans la réserve de l'aéronef.

Afin d'éviter que la réserve 33 de l'électropompe ne se vide par une tuyauterie de retour brisée d'un des équipements hydrauliques, chaque équipement est équipé sur sa ligne retour d'un clapet anti-retour de référence générale 40, évitant que le retour d'un des équipements ne se déverse dans la tuyauterie de retour brisée d'un autre. On sait en particulier que les distributeurs proportionnels 8a,8b,8c,8d sont sources de débit de retour non négligeables lors de leur fonctionnement. Ce débit de retour pourrait compromettre le niveau de fluide dans la réserve 33 de l'électropompe 30 s'il venait à se déverser vers l'extérieur par une tuyauterie de retour brisée.

L'électropompe 30 est munie d'un clapet de surpression 37 en son amont, destinée à la protéger contre la surpression à son admission. Ce clapet de surpression 37 protège également la réserve 33 contre les surpressions, en déversant le trop plein dans la réserve de l'aéronef.

Grâce à la présence de l'électropompe 30, il est possible de diminuer la taille des accumulateurs 5,105,205, sachant que l'électropompe est capable d'assurer un niveau de pression acceptable en cas de défaillance de l'accumulateur. Il suffira de prévoir des accumulateurs 5,105,205 capables de maintenir une pression acceptable pendant sensiblement la moitié d'un vol de durée standard. Cela permet de prévoir des accumulateurs plus légers et moins encombrants.

Un capteur de pression 14 est associé à chaque accumulateur, afin de surveiller sa pression, et de commander l'électropompe 30 en cas de baisse excessive de la pression d'un accumulateur.

L'invention n'est pas limitée au mode particulier de réalisation qui vient d'être décrit, mais bien au contraire entend couvrir toute variante qui, avec des moyens équivalents, reproduirait les caractéristiques essentielles définies dans les revendications.

En particulier, bien que la genèse de l'invention ait été favorisée par la prise en compte de contraintes propres liées à l'installation d'un nombre élevé atterrisseurs principaux sur des aéronefs très gros porteurs, il va de soit que l'invention pourrait s'appliquer directement à des aéronefs plus classiques munis uniquement de deux atterrisseurs principaux. Dans ce cas, on ne considère bien sûr qu'un seul groupe d'atterrisseurs principaux, et un seul circuit hydraulique principal de freinage, assisté par des accumulateurs en nombre suffisant et une électropompe commune.

Bien que l'on ait prévu, dans le mode de réalisation décrit, un sélecteur de freinage et un sélecteur de parc par accumulateur, il est possible de moduler le nombre des sélecteurs. En particulier, on envisage des architectures ne comprenant qu'un seul sélecteur de parc pour tous les freins du groupe associé au circuit. Dans ce cas, l'accumulateur associé au sélecteur de parc unique est dimensionné en conséquence, et les autres accumulateurs peuvent alors être prévus plus petits, car ils n'ont plus à assurer la fonction de parc. On peut même envisager d'utiliser un accumulateur supplémentaire uniquement destiné à assurer la fonction de parc en association avec le sélecteur de parc unique, cet accumulateur n'ayant donc pas à assurer la fonction de freinage secours.

Les accumulateurs pourront enfin être du type à gaz (à piston séparateur, vessie, soufflet...), du type à ressort, ou de tout type équivalent.

## Revendications

1. Architecture de système hydraulique de freinage adaptée à un aéronef du type comportant au moins un groupe (G) d'atterrisseurs principaux (I, II), chaque atterrisseur (I, II) comportant un nombre déterminé de roues munies chacune d'un frein (9a...9d, 109a...109d, 209a...209d) actionné hydrauliquement, le ou chaque groupe (G) d'atterrisseurs (I, II) étant associé à un circuit hydraulique (C) muni d'équipements hydrauliques et adapté pour acheminer vers tous les freins (9a...9d, 109a...109d, 209a...209d) du groupe (G) d'atterrisseurs (I,II) un fluide hydraulique mis sous pression par au moins un dispositif de génération de pression de l'aéronef associé à une réserve de l'aéronef (50), **caractérisée en ce que** des accumulateurs (5,105,205) sont connectés sur le ou chaque circuit (C) en nombre suffisant pour alimenter chacun deux paires de freins (I.1 et II.1, I.2 et II.2, I.3 et II.3), chaque paire de freins étant montée sur un atterrisseur distinct (I et II), et **en ce qu'**une électropompe (30,31) est agencée pour maintenir un niveau de pression prédéterminé dans tous les accumulateurs (5,105,205) du circuit (C) concerné.

2. Architecture selon la revendication 1, **caractérisée en ce que** au moins un accumulateur (5,105,205) est équipé d'un clapet de surpression (13,113,213).

3. Architecture selon l'une des revendication 1 ou 2, **caractérisée en ce qu**'au moins un clapet anti-retour (4,104,204) est installé sur la ligne connectant l'accumulateur (5,105,205) au dispositif de génération de pression de l'aéronef (50).

4. Architecture selon l'une des revendication 1 à 3, **caractérisée en ce que** l'électropompe (30,31) est équipée de sa propre réserve (33) de fluide hydraulique.

5. Architecture selon l'une des revendication 1 à 4, **caractérisée en ce que** le circuit (C) comporte un clapet anti-retour général (2) sur la ligne de connexion au dispositif de génération de pression, en amont de l'électropompe (30,31).

6. Architecture selon la revendication 5, **caractérisée en ce qu**'un sélecteur de retour (35) est agencé pour collecter les lignes retour (34) des équipements hydrauliques situés en aval du clapet anti-retour général (2), ce sélecteur de retour (35) dirigeant le flux de fluide hydraulique de retour soit vers la réserve de l'aéronef, soit vers la réserve (33) de l'électropompe (30,31).

7. Architecture selon la revendication 5 ou 6, **caractérisée en ce qu'**au moins un équipement hydraulique du circuit hydraulique (C) est équipé d'un clapet anti-retour (40) sur sa ligne de retour.

8. Architecture selon l'une des revendications 1 à 7, **caractérisée en ce qu**'au moins un sélecteur de freinage (6,106,206) est agencé sur le circuit en aval d'au moins un accumulateur (5,105,205).

9. Architecture selon l'une des revendications 1 à 8, **caractérisée en ce qu**'au moins un distributeur proportionnel (8a...8d, 108a...108d, 208a...208d) est agencé en aval d'au moins un sélecteur de freinage (6,106,206).

10. Architecture selon l'une des revendications 1 à 9, **caractérisée en ce qu'**au moins un sélecteur de parc (7,107,207) est agencé sur le circuit en aval d'au moins un accumulateur (5,105,205).

11. Architecture selon la revendication 9 et la revendication 10, **caractérisée en ce qu'**un clapet navette (10a...10d, 110a...110d, 210a...210d) est installé en amont de chaque frein (9a...9d, 109a...109d, 209a...209d), ce clapet navette (10a...10d, 110a...110d, 210a...210d) étant connecté d'une part au distributeur proportionnel (8a...8d, 108a...108d, 208a...208d) associé au frein (9a...9d, 109a...109d, 209a...209d), et d'autre part au sélecteur de parc (7, 107, 207) associé à l'accumulateur (5, 105, 205) alimentant le frein (9a...9d, 109a...109d, 209a...209d) associé.

12. Architecture selon l'une des revendications 1 à 11, **caractérisée en ce qu**'au moins un capteur de pression (14,114,214) est associé à au moins un accumulateur (5, 105, 205).

## Claims

1. An architecture for a hydraulic braking system suitable for an aircraft of the type having at least one group (G) of main landing gear units (I, II), each landing gear unit (I, II) comprising a determined number of wheels each provided with a hydraulically actuated brake (9a...9d, 109a...109d, 209a...209d), the or each landing gear group (G) being associated with a hydraulic circuit (C) provided with hydraulic equipment and adapted to deliver hydraulic fluid under pressure to all of the brakes (9a...9d, 109a...109d, 209a...209d) of the landing gear group, the hydraulic fluid being pressurized by at least one aircraft pressure generator system (50) associated with an aircraft hydraulic fluid supply, the architecture being **characterized in that** accumulators (5, 105, 205) are connected on the or each circuit (C) in sufficient number for each accumulator to feed two pairs of brakes (I.1 & II.1, I.2 & II.2, and II.3 & II.3), each pair of brakes being mounted on a distinct landing gear unit (I and II), and **in that** an electrically-driven pump (30, 31) is arranged to maintain a predetermined pressure level in all of the accumulators (5, 105, 205) of the circuit (C) in question.

2. An architecture according to claim 1, **characterized in that** at least one accumulator (5, 105, 205) is fitted with an overpressure relief valve (13, 113, 213).

3. An architecture according to claim 1 or claim 2, **characterized in that** at least one check valve (4, 104, 204) is installed on the line connecting the accumulator (5, 105, 205) to the aircraft's pressure generator system (50).

4. An architecture according to any one of claims 1 to 3, **characterized in that** the electrically-driven pump (30, 31) is associated with its own supply (33) of hydraulic fluid.

5. An architecture according to any one of claims 1 to 4, **characterized in that** the circuit (C) includes a general check valve (2) on the line connecting it to the pressure generator system, upstream from the electrically-driven pump (30, 31).

6. An architecture according to claim 5, **characterized in that** a return selector (35) is arranged to unite the return lines (30) from the hydraulic equipment situated downstream from the general check valve (2), said return selector (35) directing the return flow of hydraulic fluid either to the aircraft's fluid supply, or else to the fluid supply (33) of the electrically-driven pump (30, 31).

7. An architecture according to claim 5 or claim 6, **characterized in that** at least piece of hydraulic equipment in the hydraulic circuit (C) is fitted with a check valve (40) on its return line.

8. An architecture according to any one of claims 1 to 7, **characterized in that** at least one braking selector (6, 106, 206) is arranged on the circuit downstream from at least one accumulator (5, 105, 205).

9. An architecture according to any one of claims 1 to 8, **characterized in that** at least one proportional control valve (8a...8d, 108a...108d, 208a...208d) is connected downstream from at least one braking selector (6, 106, 206).

10. An architecture according to any one of claims 1 to 9, **characterized in that** at least one parking selector (7, 107, 207) is arranged on the circuit downstream from at least one accumulator (5, 105, 205).

11. An architecture according to claim 9 and claim 10, **characterized in that** a shuttle valve (10a...10d, 110a...110d, 210a...210d) is installed upstream from each brake (9a...9d, 109a...109d, 209a...209d), said shuttle valve (10a...10d, 110a...110d, 210a...210d) being connected firstly to the proportional control valve (8a...8d, 108a...108d, 208a...208d) associated with the brake (9a...9d, 109a...109d, 209a...209d), and secondly to the parking selector (7, 107, 207) associated with the accumulator (5, 105, 205) feeding the associated brake (9a...9d, 109a...109d, 209a...209d).

12. An architecture according to any one of claims 1 to 11, **characterized in that** at least one pressure sensor (14, 114, 214) is associated with at least one accumulator (5, 105, 205).

## Patentansprüche

1. Architektur für ein hydraulisches Bremssystem, das an ein Flugzeug vom Typ angepasst ist, der mindestens eine Gruppe (G) von Hauptfahrwerken (I, II) umfasst, wobei jedes Fahrwerk (I, II) eine vorgegebene Anzahl von Rädern umfasst, die jeweils mit einer hydraulisch betätigten Bremse (9a...9d, 109a...109d, 209a...209d) versehen sind, wobei die oder jede Gruppe (G) von Fahrwerken (I, II) mit einem Hydraulikkreis (C) verbunden ist, der mit hydraulischen Anlagen versehen und dazu geeignet ist, zu allen Bremsen (9a...9d, 109a...109d, 209a...209d) der Gruppe (G) von Fahrwerken (I, II) ein Hydraulikfluid zu leiten, das durch mindestens eine Druckerzeugungsvorrichtung des Flugzeugs, die mit einer Reserve (50) des Flugzeugs verbunden ist, unter Druck gesetzt wird, **dadurch gekennzeichnet, dass** Akkumulatoren (5, 105, 205) an den oder jeden Kreis (C) in einer Anzahl angeschlossen sind, die ausreicht, um jeweils zwei Bremsenpaare (I.1 und II.1, I.2 und II.2, I.3 und II.3) zu versorgen, wobei jedes Bremsenpaar an einem anderen Fahrwerk (I und II) angebracht ist, und dass eine Elektropumpe (30, 31) derart ausgebildet ist, dass sie in allen Akkumulatoren (5, 105, 205) des betreffenden Kreises (C) ein vorgegebenes Druckniveau aufrechterhält.

2. Architektur nach Anspruch 1, **dadurch gekennzeichnet, dass** mindestens ein Akkumulator (5, 105, 205) mit einem Überdruckventil (13, 113, 213) ausgestattet ist.

3. Architektur nach einem der Ansprüche 1 oder 2, **dadurch gekennzeichnet, dass** mindestens ein Rückschlagventil (4, 104, 204) in der Leitung eingebaut ist, die den Akkumulator (5, 105, 205) mit der Druckerzeugungsvorrichtung (50) des Flugzeugs verbindet.

4. Architektur nach einem der Ansprüche 1 bis 3, **dadurch gekennzeichnet, dass** die Elektropumpe (30, 31) mit ihrer eigenen Hydraulikfluidreserve (33) ausgerüstet ist.

5. Architektur nach einem der Ansprüche 1 bis 4, **dadurch gekennzeichnet, dass** der Kreis (C) ein Hauptrückschlagventil (2) in der Verbindungsleitung zur Verbindung mit der Druckerzeugungsvorrichtung stromaufwärts der Elektropumpe (30, 31) umfasst.

6. Architektur nach Anspruch 5, **dadurch gekennzeichnet, dass** ein Rückflusswahlschalter (35) derart ausgebildet ist, dass er die Rückleitungen (34) der stromabwärts des Hauptrückschlagventils (2) befindlichen hydraulischen Anlagen sammelt, wobei dieser Rückwahlschalter (35) den Rückfluss an Hydraulikfluid entweder zur Reserve des Flugzeugs oder zur Reserve (33) der Elektropumpe (30, 31) leitet.

7. Architektur nach Anspruch 5 oder 6, **dadurch gekennzeichnet, dass** mindestens eine hydraulische Anlage des Hydraulikkreises (C) in ihrer Rückleitung mit einem Rückschlagventil (40) ausgestattet ist.

8. Architektur nach einem der Ansprüche 1 bis 7, **dadurch gekennzeichnet, dass** mindestens ein Bremswahlschalter (6, 106, 206) in dem Kreis stromabwärts mindestens eines Akkumulators (5, 105, 205) angeordnet ist.

9. Architektur nach einem der Ansprüche 1 bis 8, **dadurch gekennzeichnet, dass** mindestens ein Proportionalventil (8a...8d, 108a...108d, 208a...208d) stromabwärts mindestens eines Bremswahlschalters (6, 106, 206) angeordnet ist.

10. Architektur nach einem der Ansprüche 1 bis 9, **dadurch gekennzeichnet, dass** mindestens ein Parkwahlschalter (7, 107, 207) an dem Kreis stromabwärts mindestens eines Akkumulators (5, 105, 205) angeordnet ist.

11. Architektur nach Anspruch 9 und Anspruch 10, **dadurch gekennzeichnet, dass** ein Wechselventil (10a...10d, 110a...110d, 210a...210d) stromaufwärts jeder Bremse (9a...9d, 109a...109d, 209a...209d) eingebaut ist, wobei dieses Wechselventil (10a...10d, 110a...110d, 210a...210d) einerseits mit dem Proportionalventil (8a...8d, 108a...108d, 208a...208d), das mit der Bremse (9a...9d, 109a...109d, 209a...209d) verbunden ist, und andererseits mit dem Parkwahlschalter (7, 107, 207) verbunden ist, der mit dem Akkumulator (5, 105, 205) verbunden ist, der die dazugehörige Bremse (9a...9d, 109a...109d, 209a...209d) versorgt.

12. Architektur nach einem der Ansprüche 1 bis 11, **dadurch gekennzeichnet, dass** mindestens ein Drucksensor (14, 114, 214) mit mindestens einem Akkumulator (5, 105, 205) verbunden ist.
